## Europäisches Patentamt
## European Patent Office
## Office européen des brevets

(11) Publication number: **0 178 757**
**A2**

## (12) EUROPEAN PATENT APPLICATION

(21) Application number: 85305606.7

(51) Int. Cl.⁴: **G 05 D 25/02**

(22) Date of filing: 07.08.85

(30) Priority: **15.10.84 US 660811**

(43) Date of publication of application:
**23.04.86 Bulletin 86/17**

(84) Designated Contracting States:
**DE FR GB IT**

(71) Applicant: **TRW INC.**
**23555 Euclid Avenue**
**Cleveland Ohio 44117(US)**

(72) Inventor: **Reppucci, George Michael**
**8360 Kenyon Avenue**
**Los Angeles California 90045(US)**

(72) Inventor: **Decker, Darwin Kent**
**3233 Canal Point Road**
**Hacienda Heights California 91745(US)**

(72) Inventor: **Lepisto, Jack William**
**25745 North Adobe Road**
**Valencia California 91355(US)**

(74) Representative: **Allden, Thomas Stanley et al,**
**A.A. THORNTON & CO. Northumberland House 303-306**
**High Holborn**
**London WC1V 7LE(GB)**

(54) Solar array regulator.

(57) Apparatus for regulating the voltage output of a solar cell array by selectively actuating individual cells that have been constructed to include a light control valve capable of being rendered opaque or transparent under electrical control. By automatically controlling selected cells in the array in this manner, the output characteristics of the array can be regulated to compensate for variations caused by temperature or other changes.

FIG. 1

SOLAR ARRAY REGULATOR

BACKGROUND OF THE INVENTION

This invention relates generally to solar cell arrays, and more particularly, to techniques for regulating the electrical output of an array in varying conditions. Arrays of semiconductor solar cells are frequently used as the principal power source in spacecraft and terrestrial application, to power battery charging circuits, or to power other electical equipment directly.

Although solar cell arrays are an efficient and reliable power source, there are some commonly encountered conditions that vary the operating characteristics of such arrays. Variations in temperature can produce wide variations in the output voltage of a solar cell array, and some form of voltage regulation is therefore necessary. More specifically, the maximum or open-circuit voltage available from an array is significantly increased when the temperature of the cells making up the array is relatively low. When a spacecraft emerges from a shadow condition, as when eclipsed by the earth or some other body, the temperature of the array may be as low as approximately -176 degrees C. After exposure to direct sunlight for some minutes, the temperature may rise by as much as 200 degrees C. The voltage output from an array that has just emerged from shadow may be almost double the value obtained after the array reaches its equlibrium temperature in sunlight.

Unless the electrical load on the array can be increased during periods when the temperature is low, the output voltage must be regulated down to a lower value. The technique normally used is to bypass or short-circuit strings of cells by means of high-power switching transistors. If each string of cells in the array is shortened by appropriate switching, the output of the array is reduced, but only at the expense of power dissipation in the switching transistors. Consequently, the power dissipation of the transistors is greatly increased during periods that the voltage is being regulated in this manner.

It will be appreciated from the foregoing that there is a need for an alternative technique for regulating the electrical output of a solar cell array during conditions of increased voltage. This need is especially accute in spacecraft power supply applications, but is also present in terrestrial applications in which arrays are subject to wide temperature fluctuations.

## SUMMARY OF THE INVENTION

The present invention resides in the use of an electrically controlled optical device to regulate the output from a solar cell array having multiple solar cells. Basically, and in general terms, the apparatus of the invention comprises means for providing control signals indicative of a desired change in electrical output of the array, and electrically operated light valve means installed on selected cells of the array and operable by the control signals to control the amount of radiation reaching the selected cells, and therefore the total electrical output of the array. The means for providing control signals includes means for monitoring the output voltage of the solar cell array, means for comparing the monitored output voltage with a desired reference value and generating a difference signal, and control means responsive to the difference signal, to generate control signals to regulate the output of the array.

More specifically, the light valve means may take the form of cover panels that include a liquid crystal element. The control signals are then effective to render the cover panels relatively opaque to at least some portion of the solar radiation spectrum.

The control means of the invention may be constructed to provide a plurality of control signals, the number of which is dependent on the magnitude of the difference signal. For larger differences between the actual voltage and the desired reference voltage, a larger number of control signals will be generated, each being coupled to separate cells or groups of cells in the array. Alternatively, the light valve means is responsive to an analog signal to provide varying degrees of opaqueness, and the control means then produces a single analog control signal, the magnitude of which determines the degree to which all of the light valve means are rendered opaque.

Although liquid crystal displays provide the necessary characteristics to function as a light valve, other materials under development may prove to have superior characteristics. For example, a ceramic material referred to as PLZT (lead lanthanate zirconate titanate) has electrically controllable light transmission properties.

It will be appreciated from the foregoing that the present invention represents a significant advance in the field of solar cell arrays. In particular, the invention provides an efficient technique for modulating the voltage output from a solar array without bypassing cells in the array. Other aspects and advantages of the invention will become apparent from the following more detailed description, taken in conjunction with the accompanying drawings.

## BRIEF DESCRIPTION OF THE DRAWINGS

FIGURE 1 is a simplified schematic diagram of a solar cell array, the voltage output of which is regulated in accordance with the invention;

FIG. 2 is a graph showing the current-versus-voltage characteristics of a solar cell array; and

FIG. 3 shows the comparative current-versus-voltage characteristics of a typical solar cell having a liquid crystal display (LCD) light valve installed and either activated or inactivated.

## DESCRIPTION OF THE PREFERRED EMBODIMENT

As shown in the drawings for purposes of illustration, the present invention is concerned with a novel technique for regulating the output voltage of an array of solar cells. A single solar cell is a diode of silicon or other semiconductor material, having the property that an electrical current is generated as a result of the incidence of light on the cell. A single cell can generate an open-circuit voltage of about 0.5 volt, i.e. when no load is connected to the cell, and has a short-circuit current of about 50 milliamperes (mA) or less, i.e. the current that flows when the output terminals of the cell are connected together in a short-circuit condition. Because the electrical output of a single cell is of little practical application, cells are typically connected together in an array having multiple strings of series-connected cells. Each string has a combined voltage output of many times that of a single cell. Increased current output is provided by connecting multiple strings in parallel to form the array.

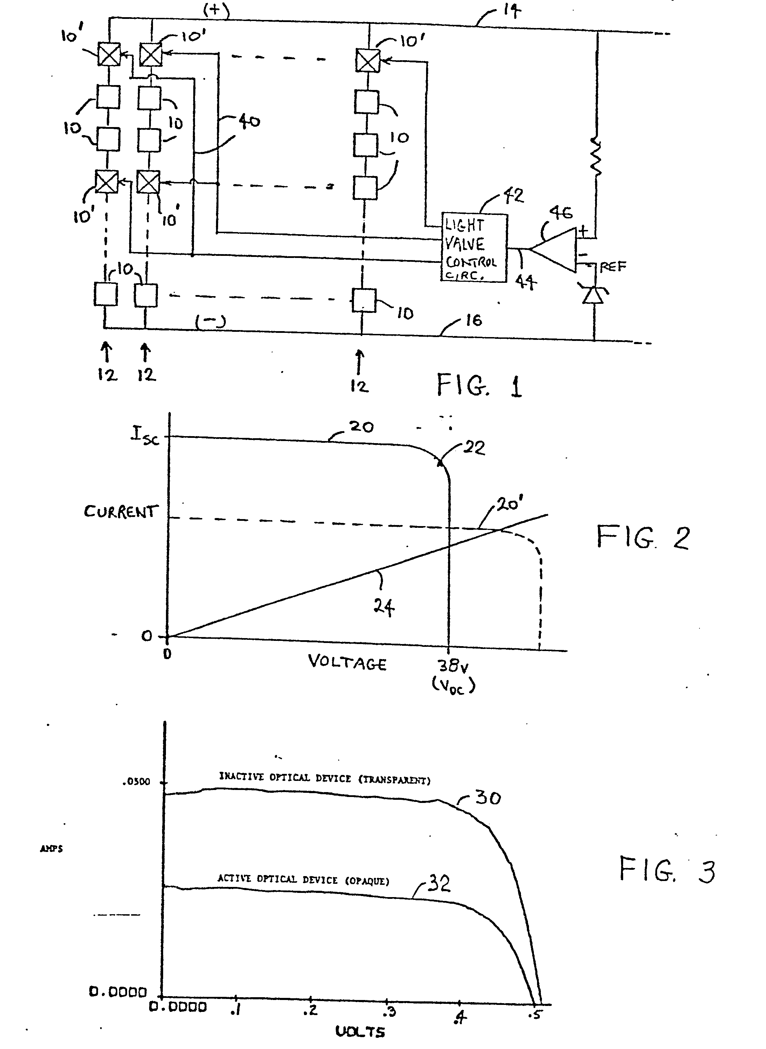

Such an array is shown in fragmentary and diagrammatic form in FIG. 1. Multiple cells, indicated by reference numeral 10, are connected in series strings 12, which are connected together in parallel between two output buses 14 and 16. A typical current-versus-voltage characteristic for an array is shown in FIG. 2. If the output buses are open-circuited, the output current is zero and the output voltage is the open-circuit voltage, which is indicated as approximately 38 volts. If the output buses are connected together, the output voltage is zero and the current generated is the short-circuit current, indicated as $I_{sc}$. At the short-circuit current condition, the load impedance is zero. If the load impedance is gradually increased, the output voltage also increases, but the current initially remains relatively constant, as indicated by the curve 20. As the voltage approaches its open-circuit value, the current begins to drop off rapidly.

The characteristic has a limiting operating point, indicated at 22, at which the output power, the product of current and voltage, will be at a maximum. When the array is not electrically loaded, the open-circuit output voltage will be generated. As electrical load is added to the array, the voltage will fall off slightly, and the current will increase, providing increasing power output from the array. However, when the maximum power output point 22 is reached, further attempts to increase the load will result in significant reduction in the voltage and the output power. A typical, partly loaded condition is indicated by the load line 24.

The problem with which the invention is concerned arises because the current-voltage characteristic 20 changes significantly when the array is at a lower operating temperature, as when a spacecraft on which the array is installed has just emerged from a shadow. The characteristic for such a reduced temperature condition is shown at 20'. The curve 20' has the same general shape as curve 20, but the short-circuit current is reduced and the open-circuit voltage is increased. Typically, a single solar cell has a temperature coefficient of 2 millivolts (mv) per degree C, i.e., the voltage output of the cell changes by 2mv for each degree of temperature change. For a string of a hundred cells exposed to temperature differences of 200 degrees, the overall voltage variation can be as high as 40 volts, or a 100-percent variation. Unless the electrical load can be increased, some means must be provided to regulate this increased voltage down to the normal level. In the past, this has been done by selectively short-circuiting sub-strings of cells by means of high-power switching transistors, in which power must be dissipated.

In accordance with the invention, selected cells, indicated at 10', are provided with a light control valve, to "shadow" these cells from radiation and thereby reduce the total voltage generated by each series string 12. Electrically actuated light valves have been known for some time, but not applied to the problem of solar array voltage regulation. United States Pat. No. 2,185,379 to Meyers et al. discloses an electrically controlled light valve proposed for use in a projection television system. The use of electric fields to control a diffraction grating is disclosed in United States Pat. No. 3,813,142 to Buhrer. Moreover, the properties of liquid crystal cells for use as optical switches in a general sense is well known. There are many patents and publications concerning liquid crystals and liquid crystal displays (LCDs). For example, United States Pat. No. 4,385,799 to Soref and United States Pat. No. 3,791,716 to Borel et al.

Each of the selected cells 10' includes a cover panel having an electrically controllable element, by means of which the transmission of light to the cell is controlled. Basically, the controllable element must be able to render the cover panel relatively opaque to radiation over some portion of the spectrum to which the cell is responsive.

One controllable element that satisfies this requirement is the liquid crystal display (LCD) element. As is well known, the application of an electric field to the liquid crystal element results in an arrangement of the crystalline structure that renders the element relatively opaque and black in appearance. A suitable LCD element is liquid crystal Model No. CIN-6-ITC manufactured by UCE Inc., of Norwalk, Connecticut 06855.

FIG. 3 shows how the output characteristic of a solar cell is effected by activation of the electrically controllable element. Curve 30 shows the I-V characteristic when the LCD element is inactive and relatively transparent, and curve 32 shows the same characteristic after activation of the element to render it relatively opaque. The output current is reduced by about half and the voltage reduced by a lesser amount. A more ideal light valve element would effectively collapse the output characteristic and produce zero output contribution to a string of cells.

Another possible material for use as a light valve is an optical ceramic material referred to as PLZT (lead lanthanate zirconate titanate). This and related materials have been investigated for various applications, such as in aircraft cockpit windows and protective eye shields. These ceramic materials can be controlled to provide good reflectivity properties, suitable for reflecting incident radiation from selected solar cells in an array.

In a practical application of the principles of the invention, each of the selected cells 10' is connected by control lines 40 to a control circuit 42. The control circut 42 receives on line 44 a signal indicative of the difference between the actual output voltage of the array and a reference voltage. The difference signal is provided by a diffenece amplifier 46 to which are connected two input lines 48 and 50 carrying signals indicative of the actual and reference voltages, respectively. The function of the control circuit 42 is to produce control signals on lines 40 to "shadow" selected ones of the cells 10'. It will be apreciated that the nature of the control signals on lines 40 will depend on the nature of the light control valve elements used in the cells 10'. If the control valves are binary in nature, that is either on or off, the control signals will also be binary and will be distributed in such a manner as to effect the desired reduction in output from the array, by actuating an appropriate number of the cells 10' in each array string 12. If the control valves are analog in nature, providing a continuously variable tranmissivity of light, then the control signals on line 40 will also be analog signals, varying the transmissivity of all of the selected cells 10' by an appropriate amount to regulate the output voltage to its desired level.

One difficulty with selective shadowing of cells in an array, is that each shadowed cell that produces no output, or a reduced output, functions as an electrical load on the array. If a single cell in a string is selected for shadowing, the voltage across the cell can be high enough that significant power is dissipated in the cell in the form of heat. This creates a "hot spot" in the array, which can have a significant effect on the mechanical design of the array. The problem can be minimized by ensuring that cells selected for shadowing are spaced apart by no more than some minimum amount in each cell string.

It will be appreciated from the foregoing that the present invention represents a significant advance in the field of solar cell arrays. In particular, the invention provides a novel technique for regulating the electrical output of an array without using switching transistors to selectively short-circuit strings of cells. The advantages of the technique are that it uses a small number of additional parts, it is light in weight, and it consumes very little power to effect control of the array.

It will be also appreciated that, although a specific embodiment of the invention has been described in detail for purposes of illustration, various modifications may be made without departing from the spirit and scope of the invention. Accordingly, the invention is not to be limited except as by the appended claims.

## CLAIMS

1. Apparatus for regulating the electrical output of a solar cell array having multiple solar cells, the apparatus comprising:

means for providing control signals indicative of a desired change in electrical output of the array; and

electrically actuated light valve means installed on selected cells of the array and operable by the control signals to control the amount of radiation reaching the selected cells, and therefore the total electrical output of the array.

2. Apparatus as set forth in claim 1, wherein the means for providing control signals includes:

means for monitoring the output voltage of a solar cell array;

means for comparing the monitored output voltage with a desired reference value and generating a difference signal; and

control means responsive to the difference signal, to generate the control signals to regulate the output of the array.

3. Apparatus as set forth in claim 1, wherein:

the electrically actuated light valve means includes a cell cover panel having a liquid crystal element switchable between a relatively transparent condition and a relatively opaque condition.

0178757

-11-

4. Apparatus as set forth in claim 2, wherein:

the electrically actuated light valve means includes a cover panel having a liquid crystal element switchable between a relatively transparent condition and a relatively opaque condition.

5. Apparatus as set forth in claim 1, wherein:

the electrically actuated light valve means includes a cover panel of an optical ceramic material.

6. Apparatus as set forth in claim 2, wherein:

the electrically actuated light valve means includes a cover panel of an optical ceramic material.

0178757

FIG. 1

FIG. 2

FIG. 3